# EUROPÄISCHE PATENTANMELDUNG

(11) **EP 2 570 502 A1**
(43) Veröffentlichungstag der Anmeldung: **20.03.2013**
(21) Anmeldenummer: 11181139.4
(22) Anmeldetag: 13.09.2011
(51) Int. Cl.: C14C 1/04, C14C 3/06, C14C 3/28, A01N 31/08, C14C 9/00

(54) **Flüssige Wirkstoffpräparationen zum fungiziden Schutz von collagenfaserhaltigen Substraten**

(71) Anmelder: LANXESS Deutschland GmbH, 51369 Leverkusen (DE)
(72) Erfinder: Kathrin Leppchen-Fröhlich, Dr., 09599 Freiberg (DE); Michael Meyer, Dr., 01159 Dresden (DE); Martin-Alfred Völker, 70190 Stuttgart (DE); Hartmut Rehbein, 47506 Neukirchen-Vluyn (DE); Dietrich Tegtmeyer, Dr., 51467 bergisch Gladbach (DE); Christopher Sydney Tysoe, 51375 Leverkusen (DE)

(57) **Zusammenfassung**

Flüssige Wirkstoffpräparationen, enthaltend jeweils bezogen auf die flüssige Wirkstoffpräparation
a) 55 - 89 Gew.-% wenigster einer bei Raumtemperatur flüssigen C₈-C₁₈-Carbonsäure der deren Derivate, bevorzugt Caprylsäure,
b) wenigstes 10 Gew.-%, insbesondere 20 - 35 Gew.-% einer Mischung bestehend aus phenolischen Wirkstoffen, von denen wenigstens ein Wirkstoff o-Phenylphenol (OPP) oder p-Chlor-m-Kresol (CMK) ist und das Gewichtsverhältnis von OPP oder CMK zu der Summe der anderen phenolischen Wirkstoffe der Mischung 80 : 20 bis 20 : 80 beträgt und
c) 1 - 10 Gew.-% weitere Fungizidwirkstoffe.

## Beschreibung

Die Erfindung betrifft flüssige Wirkstoffpräparationen, Verfahren zu ihrer Herstellung sowie ihre Verwendung zur Konservierung von collagenfaserhaltigen Substraten, insbesondere tierischen Häuten, Leder, Pelzfellen, sowie deren Halbfabrikate (Wet blue / Wet white).

Zum Schutz von Häuten, Leder und Pelzfellen, sowie deren Halbfabrikate (Wet blue / Wet white) werden bevorzugt flüssige Darreichungen fungizider Wirkstoffformulierungen eingesetzt. Der Vorteil der flüssigen Applikation gegenüber festen Produkten liegt in der leichteren Handhabbarkeit dieser Formulierungen, wie z. B. nicht staubend, pump- und gießfähig, direkte Verteilung im wässrigen Prozessmedium (Pickel-, Gerbflotte oder Fettlicker), kein Lösen, Sprüh-Applikation - verdünnt / unverdünnt möglich.

Bekannt sind bspw. aus älteren Anmeldungen, wie WO-A-96/36739, WO-A98/56959 und WO-A-02/23985 Wirkstofflösungen phenolischer Wirkstoffe mit einem Wirkstoffgehalt von bis zu 50 Gew.-% für die Konservierung von Leder und tierischen Häuten.

Weiterhin ist bekannt aus den Anmeldungen EP 0 553 628 A1, US 2007/0292465 A1 und WO 2010018156, dass Darreichungen eutektischer Gemische, basierend auf phenolischen Wirkstoffen, auch in Kombination mit weiteren Fungiziden, zum Schutz von Häuten und Leder, sowie deren Halbfabrikate eingesetzt werden können.

Zusätzlich ist bekannt, aus Anmeldung DE 102008040953 A1, dass bestimmte Carbonsäurederivate und deren Salze zur fungistatischen Ausrüstung von Leder, Fellen und Häuten, sowie deren Halbfabrikate in der Lederindustrie Anwendung finden können. Darin wurde zwar mit der vorzugsweisen Anwendung von Oktansäure (Caprylsäure) ein wesentlicher Beitrag zur Verringerung der toxikologischen Belastung durch zum Teil giftige fungizide Wirkstoffe beschrieben. Jedoch müssen zum tatsächlichen Schutz von Leder, Fellen und Häuten, sowie deren Halbfabrikaten, größere Mengen der Wirkstoffe als üblich, vorzugsweise Caprylsäure, eingesetzt werden (0.8 - > 1.0%, bezogen auf das Blössengewicht), sodass eine Veränderung der Substrateigenschaften (z. B. Geruch) nicht ausgeschlossen werden kann.

Nachteilig an diesen Wirkstoffen ist auch, dass die notwendige, erhöhte Wirkstoffdosierung bei gleichzeitig geringer Wasserverträglichkeit / Wasserlöslichkeit, bei den vorwiegend wässrigen Herstellungsprozessen zu Inhomogenitäten in den zu schützenden Substraten führt, Im Übrigen ist die bevorzugte Caprylsäure mit einem Schmelzpunkt von 16°C, aber auch die höheren Homologen der Carbonsäurederivate mit zum Teil deutlich höheren Schmelzpunkten - sowie die zugehörigen Salze -, als flüssige Substanzen häufig nicht verfügbar. Erstarrung bei entsprechender Abkühlung auf oder unter Raumtemperatur führt zur zwanghaften Darreichen von nicht bevorzugten Feststoffen, zum Teil pastös, und damit technisch nahezu ungeeignet in den üblichen Herstellungsprozessen.

Aufgabe der vorliegenden Erfindung war es daher, stabile Wirkstoffpräparationen zu finden, die einerseits die verarbeitungstechnischen Vorteile flüssiger Formulierungen und gleichzeitig hohe Wirkstoffkonzentrationen bei gleicher oder gar erhöhter Stabilität aufweisen, sowie toxikologisch, ökologisch und aus Sicht des Verbraucherschutzes ein Optimum der aktuellen technischen Möglichkeiten darstellen - z. B. durch niedrige Dosierung der erfindungsgemäßen Darreichungen.

Überraschend wurde nun gefunden, dass man die Aufgabe unter Anwendung bestimmter Wirkstoffpräparationen lösen kann.

Die Erfindung betrifft daher flüssige Wirkstoffpräparationen, enthaltend jeweils bezogen auf die Wirkstoffpräparation
a) 55 - 89 Gew.-%, bevorzugt 60 - 70 Gew.-% wenigstens einer bei Raumtemperatur (20°C) flüssigen C₈-C₁₈-Carbonsäure oder deren Derivate, bevorzugt Caprylsäure,
b) wenigstes 10 Gew.-%, insbesondere 20 - 35 Gew.-% einer Mischung bestehend aus phenolischen Wirkstoffen, von denen wenigstens ein Wirkstoff o-Phenylphenol (OPP) oder p-Chlor-m-Kresol (CMK) ist und das Gewichtsverhältnis von OPP oder CMK zu der Summe der anderen phenolischen Wirkstoffe der Mischung 80 : 20 bis 20 : 80 beträgt und
c) 1 - 10 Gew.-%, bevorzugt 2 - 10 Gew.-% weitere Fungizidwirkstoffe.

Unter "flüssig" wird im Rahmen dieser Anmeldung vorzugsweise ein Schmelzpunkt >5°C verstanden.

Als Carbonsäuren der Komponente a) kommen insbesondere Carbonsäuren mit Alkylresten der Kettenlängen C₈-C₁₈ in Frage, die gesättigt oder einfach oder mehrfach ungesättigt, verzweigt oder an der Alkylkette substituiert sind. Als Derivate kommen insbesondere deren Metallsalze in Frage.

Vorzugsweise geeignet sind dabei Carbonsäuren mit Alkylresten der Kettenlängen C₈-C₁₂, insbesondere solche mit C₈.

Die Alkylreste können zweckmäßig mit Hydroxylgruppen, Sulfat-, Sulfit-, Nitrat-, Nitrit, Aminen oder aromatisch an der Alkylkette einfach oder mehrfach substituiert sein. Bevorzugt sind sie aber unsubstituiert. Vorzugsweise sind die Metallsalze Alkali-, Erdalkali- und/oder Übergangsmetallsalze.

Als weitere Derivate sind vorteilhaft Ester oder Amide, wie Glycerolmonocaprat, Glycerolmonolaurat oder Undecylensaeureamid.

Besonders bevorzugte Carbonsäuren oder deren Derivate der Komponente a) sind Caprylsäure, Pelargonsäure, Undecensäure, Methyl-9-Heptadecensäure, cis-9-Heptadencensäure, 3-(R)-Hydroxydecensäure, 3-Hydroxy-5-cis-decensäure, 3-(R)-Hydroxydodecensäure, 3-(R)-Hydroxytetradecensäure, Glycerolmonocaprate, Glycerolmonolaurate, Ricinolsaeure oder Kombinationen dieser Stoffe. Besonders bevorzugt ist die Caprylsäure.

Hinsichtlich der Komponente b) wird ein Gewichtsverhältnis von OPP oder CMK zur Summe anderer phenolischer Wirkstoffe von 50 : 50 bis 75 : 25 bevorzugt. Dabei kann die Mischung der Komponente b) auch nur die beiden phenolischen Wirkstoffe OPP und CMK enthalten, wobei das Verhältnis von OPP zu CMK vorzugsweise 50 : 50 bis 75 : 25 beträgt.

Bevorzugt enthalten die erfindungsgemäßen Wirkstoffpräparationen als von OPP oder CMK verschiedenen phenolischem Wirkstoff, wenigstens einen, ausgewählt aus der Gruppe Thymol, p-Thymol, Chlorophen, 2-Benzylphenol, 4-Benzylphenol und 3,5-dimethyl-4-chlorphenol (PCMX).

Als besonders bevorzugte Mischungen phenolischer Wirkstoffe der Komponente b) seien folgende Kombinationen genannt:
OPP / CMK
OPP / Thymol
OPP / p-Thymol
OPP / Chlorophen
OPP / CMK / Thymol
OPP / CMK / p-Thymol
OPP / CMK / Chlorophen
CMK / Thymol
CMK / p-Thymol
CMK / Chlorophen

Bei der Mitverwendung von weiteren von a) und b) verschiedenen Fungiziden der Komponente c) kommen vorzugsweise die nachfolgend genannten in Frage.

Als solche kommen beispielsweise aus der Klasse der heterocyclischen N,S-Verbindungen Oktyl-Isothiazolinon (OIT) und Thiabendazol (TBZ); aus der Klasse der Carbamate Iod-Propinyl-butylcarbamat (IPBC); aus der Klasse der Azole die Triazol-Derivate, Azaconazol, Hexaconazol, Cyproconazol, Propiconazol, Tebuconazol sowie Imazalil und Climbazol als Imidazol-Verbindungen in Frage. Aus der Klasse der Verbindungen mit aktivierten Halogenatomen kommt Di-Iodomethyl-p-toluylsulphon in Betracht.

Besonders bevorzugt sind Fungizide der Komponente c) Oktyl-Isothiazolinon (OIT), Thiabendazol (TBZ), Iod-Propinyl-butylcarbamat (IPBC), Tebuconazol, Climbazol und/ oder Di-Iodo-methyl-p-toluylsulphon.

Als bevorzugte Kombinationen der Komponente b) und c) sind folgende Wirkstoffkombinationen zu nennen:
OPP / CMK / OIT
OPP / CMK / TBZ
OPP / CMK / IPBC
OPP / CMK / Tebuconazol
OPP / CMK / Climbazol
OPP / CMK / Di-Iodomethyl-p-toluylsulphon (DIMTS)

OPP / Thymol / OIT
OPP / Thymol / TBZ
OPP / Thymol / IPBC
OPP / Thymol / Tebuconazol
OPP / Thymol / Climbazol
OPP / Thymol / Di-Iodomethyl-p-toluylsulphon (DIMTS)

OPP / p-Thymol / OIT
OPP / p-Thymol / TBZ
OPP / p-Thymol / IPBC
OPP / p-Thymol / Tebuconazol
OPP / p-Thymol / Climbazol
OPP / p-Thymol / Di-Iodomethyl-p-toluylsulphon (DIMTS)

OPP / Chlorophen / OIT
OPP / Chlorophen / TBZ
OPP / Chlorophen / IPBC
OPP / Chlorophen / Di-Iodomethyl-p-toluylsulphon (DIMTS)
OPP / Chlorophen / Tebuconazol
OPP / Chlorophen / Climbazol

CMK / Thymol / OIT
CMK / Thymol / TBZ
CMK / Thymol / IPBC
CMK / Thymol / Tebuconazol
CMK / Thymol / Climbazole
CMK / Thymol / Di-Iodomethyl-p-toluylsulphon (DIMTS)

CMK / p-Thymol / OIT
CMK / p-Thymol / TBZ
CMK / p-Thymol / IPBC
CMK / p-Thymol / Tebuconazol
CMK / p-Thymol / Climbazol
CMK / p-Thymol / Di-Iodomethyl-p-toluylsulphon (DIMTS)

CMK / Chlorophen / OIT
CMK / Chlorophen / TBZ
CMK / Chlorophen / IPBC
CMK / Chlorophen / Tebuconazol
CMK / Chlorophen / Climbazol
CMK / Chlorophen / Di-Iodomethyl-p-toluylsulphon (DIMTS)
oder auch
OPP / CMK / OIT/ IPBC
OPP / CMK / OIT/ TBZ
OPP / CMK / TBZ / Climbazol
OPP / CMK / OIT / Climbazol
CMK / Chlorophen / OIT / IPBC
OPP / Chlorophen / Tebuconazol / IPBC

Diese Kombinationen sind insbesondere in Kombination mit Caprylsäure der Komponente a) bevorzugt.

Die erfindungsgemäßen Wirkstoffpräparationen liegen als flüssige, stabile und pumpfähige Präparationen, insbesondere oberhalb von +5 °C vor. Schmelzpunkt erniedrigend kann hierbei die Beimengung von 5 - 10 Gew.-% niedermolekularer Alkohole wie Ethanol oder 2-Propanol oder 1 bis 15 Gew.-%, insbesondere 1 bis 10 Gew.-% eines glykolischen Lösungsmittels, insbesondere 1,2-Propandiol Ethylenglykol oder Butylenglykol wirken.

Der Wassergehalt der erfindungsgemäßen Präparation beträgt vorzugsweise weniger als 1 Gew.-%, insbesondere weniger als 0,5 Gew.-%.

Besonders bevorzugt sind die erfindungsgemäßen Wirkstoffpräparationen, die mehr als 98 Gew.-%, insbesondere mehr als 99 Gew.-% der Komponenten a) bis c) enthalten.

In einer bevorzugten Ausführungsform der flüssigen Wirkstoffpräparation werden Wirkstoffmischungen eingesetzt, enthaltend OPP und/oder CMK, wenigstens einen weiteren phenolischen Wirkstoff aus der Gruppe Thymol, p-Thymol und Chlorophen sowie wenigstens einen nicht-phenolischen Wirkstoff aus der Gruppe OIT, TBZ, IPBC, Tebuconazol und Climbazol, und Caprylsäure.

Besonders bevorzugt sind Mischungen enthaltend OPP und/oder CMK, wenigstens ein phenolischer Wirkstoff aus der Gruppe p-Thymol und Chlorophen sowie wenigstens ein nicht-phenolischer Wirkstoff aus der Gruppe OIT und IPBC, sowie Caprylsäure als Hauptbestandteil.

Die Erfindung betrifft weiterhin ein Verfahren zur Herstellung der erfindungsgemäßen Wirkstoffpräparation, dadurch gekennzeichnet, dass man
i) die Wirkstoffe der phenolischen Komponente b) gemeinsam oder nacheinander schmilzt, vorzugsweise unter Rühren, bei einer Temperatur >60°C und die Komponenten a) und c) bei einer Temperatur größer 5 °C zusetzt, oder
ii) die Wirkstoffe der phenolischen Komponente b) in einem organischen Lösungsmittel löst, das Lösungsmittel ggf. abtrennt, vorzugsweise destillativ, und die Komponenten a) und c) vor, während oder nach der Lösungsmittelzugabe zugegeben werden.

Die Erfindung betrifft weiterhin die Verwendung der erfindungsgemäßen Wirkstoffpräparation zur Konservierung von collagenfaserhaltigen Substraten, insbesondere Leder und tierischen Häuten.

Die Erfindung betrifft weiterhin ein Verfahren zum Schützen von collagenfaserhaltigen Substraten, insbesondere tierischen Häuten und Leder vor mikrobiellem Befall, indem man die Häute oder das Leder mit der erfindungsgemäßen Wirkstoffpräparation behandelt.

Das Verfahren ist vorzugsweise dadurch gekennzeichnet, dass man die erfindungsgemäßen Wirkstoffpräparationen als solche verwendet beispielsweise ohne mit Wasser zu verdünnen. Hierbei penetrieren die phenolischen Wirkstoffkomponenten sowie die Carbonsäure (Caprylsäure) in das zu schützende Substrat und lagern sich am Collagen an (Collagen-Affinität). Die Reaktivwirkstoffe sind ihrerseits vorwiegend auf der Substratoberfläche und in den oberflächennahen Schichten zu finden.

Die Prüfung der Einzelwirkstoffe und der erfindungsgemäßen Präparation erfolgt im Praxis-bezogenen Agar-Diffusionstest (ASTM 4576-08 - Standard Test Method for Mould Growth Resistance) gegen übliche Leder-relevante Prüforganismen.

Dabei wurde gefunden, dass die Einzelwirkstoffe, welche für die erfindungsgemäßen Mischungen Verwendung finden, erhebliche Lücken (Wirkungsschwächen) in ihrer fungiziden Wirkung aufweisen. So zeigte sich, dass die phenolischen Komponenten, wie OPP, CMK, Chlorophen, oder die Thymol-Derivate bei einer üblichen Dosierung von 0,2 Gew.-% (2000 ppm) eine Schwäche gegen Hormoconis resinae und auch gegen Trichoderma viride besitzen. Weiterhin wurde gefunden, dass Dosierungen von 0,2 Gew.-% IPBC bzw. 0,5 Gew.% Caprylsäure unwirksam gegen Leder-relevante Deuteromyceten (Schimmelpilze) sind.

Überraschend wurde gefunden, dass die erfindungsgemäßen Wirkstoffpräparationen besonders effektiv gegen lederzerstörende Schimmelpilz-Arten, wie z. B. Aspergillus-, Cladosporium-, Penicillium-, Trichoderma-Arten, aber auch gegen Aureobasidium sp., Coniophora sp., Fusarium sp., Paecilomyces sp., Rhizopus sp, Sclerophoma sp., Stachybotrys sp. und Trichophyton sp. sind und sich damit deutlich von der Wirkung der reinen Caprylsäure abgrenzten.

Durch die erfindungsgemäßen Wirkstoffpräparationen kann die Dosierungshöhe der reinen Caprylsäure auf ein Zehntel und weniger ihrer bisher notwendigen Menge reduziert werden.

Bei der Einzelprüfung von Caprylsäure benötigte man 0,80 - 1,00 Gew.-% (entspr. 8000 - 10.000 ppm) zur ausreichenden fungiziden Ausrüstung der feuchten Chromleder. Bei Anwendung der erfindungsgemäßen Präparationen war bereits bei Dosierung von 0,10 - 0,15 Gew.-% eine deutliche bis ausreichende Wirkung erkennbar. Somit ergibt sich eine Reduktion der Caprylsäure auf vorzugsweise 700 - 900 ppm im feuchten Chromleder.

Als Leder werden auch feuchte Chrom-Leder (wet blue) und feuchte chrom-freie Leder (wet white) verstanden. Unter tierischen Häuten werden Rohhäute - unbehandelt, direkt nach der Schlachtung - von Rindern, Schweinen, Schafen, Ziegen, Kamelen, Geflügel, wie Strauße aber auch Echsen, wie Schlange oder Krokodil verstanden.

Die erfindungsgemäßen Wirkstoffpräparationen können bei der Leder-Herstellung wahlweise direkt vor Beginn der Gerbung der tierischen Häute (Blößen), während oder nach der Gerbstoffzugabe (Chromgerbstoff, Chrom-freier, organischer Gerbstoff wie Syntane oder Vegetabilgerbstoffe) mit 0,10 - 0,30 Gew.-%, bevorzugt 0,12 - 0,15 Gew.-%, berechnet auf Blößengewicht, ins saure Prozesswasser (Gerbflotte) bei einem pH-Wert des wässrigen Mediums von 2 bis 4,5, insbesondere von 2,5 bis 3,0 zugegeben werden.

Ebenfalls besteht die Möglichkeit kurz nach der Zugabe des Abstumpfmittels (Basifizierung zur Einstellung des End-pH-Wertes) die erfindungsgemäßen Wirkstoffpräparationen in bereits genannter Menge zu dosieren. Da die beschriebenen Wirkstoffpräparationen ölige Mischungen, mit geringer Wasserlöslichkeit darstellen, werden sie vorzugsweise unverdünnt (pur) dem Prozess zugeführt. Die Wirkstoffaufnahme aus der wässrigen Prozessflotte in und auf die Leder erfolgt durch die Wirkstoffaffinitäten zur Collagenfaser der tierischen Haut.

Weiterhin besteht die Möglichkeit einer Sprühapplikation der erfindungsgemäßen Wirkstoffpräparationen direkt nach dem Ende des Gerbprozesses - nach dem Abwelken - bzw. nach dem Falten und Stapeln des fertigen, feuchten Zwischenproduktes. Dazu werden die Leder in feinster Form mit einer alkoholischen / glykolischen Verdünnung, aus 20 - 50% Lösemittel und 50 - 80% der erfindungsgemäßen Wirkstoffpräparationen, benetzt.

Es besteht auch die Möglichkeit mit den erfindungsgemäßen Präparationen Leder und Felle zum Schluss der wässrigen Herstellung - in der sogenannten Fettung - zu konservieren. Aufgrund ihrer öligen Erscheinung können die erfindungsgemäßen Mischungen in die ebenfalls öligen oder pastösen Fettungsmittel homogen eingetragen werden, vorzugsweise unter Rühren. Das dann konzentriert fungizid ausgerüstete Fett bzw. Öl wird entsprechend der Verfahrensweise / Leder-Herstellung dem finalen Prozessschritt zugefügt.

Die erfindungsgemäßen Präparationen sind lagerstabil und pumpfähig.

Trotz eines mehr als doppelt so hohen Wirkstoffgehaltes, weisen die erfindungsgemäßen Präparationen keine Nachteile gegenüber bekannten Präparationen auf, welche wenigstens 50 - 70 Gew.-% Lösemittel und/oder Formulierhilfsmittel, wie z. B. Emulgatoren enthalten.

Auch die Wirksamkeit der handelsüblichen Lösemittel-basierten Präparationen konnte erreicht werden.

Die Erfindung betrifft weiterhin ein Verfahren zum Schützen von collagenfaserhaltigen Substraten, insbesondere tierischen Häuten und Leder vor mikrobiellem Befall, dadurch gekennzeichnet, dass man die Häute oder das Leder mit einer erfindungsgemäßen Wirkstoffpräparation nach Anspruch 1 behandelt.

Die Erfindung betrifft weiterhin Collagenfaserhaltige Substrate, konserviert mit wenigstens einer erfindungsgemäßen Wirkstoffpräparation.

### Beispiele:

Die Angaben von Teilen in den Beispielen entsprechen Gewichtsteilen.

### Beispiel 1

Zur Herstellung einer erfindungsgemäßen Präparation werden 10 Teile CMK mit 25 Teile OPP flüssig zusammen gegeben (Temperatur der phenolischen Wirkstoffe ca. 70 - 80°C) und nach Abkühlen auf ca. 30 - 40°C mit 5 Teilen einer OIT-Lösung (45 Gew.- OIT in 1,2 Propandiol) gemischt. Zu diesem Wirkstoffkonzentrat werden 60 Teile Caprylsäure unter homogenisierendem Rühren hinzugefügt.

### Beispiel 2

Es wurden 15 Teile Chlorophen und 10 Teile CMK, sowie 5 Teile IPBC vorgelegt und unter vorsichtigem Rühren bis auf 40°C erwärmt und verflüssigt. Danach werden 5 Teile einer OIT-Lösung (45 Gew.-% OIT in 1,2 Propandiol) sowie 65 Teile Caprylsäure hinzugefügt.

### Beispiel 3

60 Teile Caprylsäure und 2 Teile 1,2 Propandiol werden auf ca. 35°C erwärmt. Dazu werden 20 Teile OPP und 10 Teile Chlorophen sowie 8 Teile Tebuconazol unter Rühren zugegeben. Nach Abkühlen auf Raumtemperatur erhält man eine flüssige, klare, leicht gelbliche, erfindungsgemäße Präparation. Die Mischungen der nachfolgenden Tabelle wurden analog den Beispielen 1 - 3 erhalten.

| | | | |
|---|---|---|---|
| 3. | 10,00 Gew. Teile CMK | 4. | 15,00 Gew. Teile OPP |
| | 20,00 Gew. Teile OPP | | 15,00 Gew. Teile Chlorophen |
| | 2,25 Gew. Teile OIT | | 5,00 Gew. Teile Tebuconazol |
| | 5,00 Gew. Teile IPBC | | 5,00 Gew. Teile IPBC |
| | 60,00 Gew. Teile Caprylsäure | | 60,00 Gew. Teile Caprylsäure |
| | 2,75 Gew. Teile 1,2 Propandiol | | |
| 5. | 15,00 Gew. Teile OPP | 6. | 10,00 Gew. Teile OPP |
| | 10,00 Gew. Teile IPBC | | 15,00 Gew. Teile Thymol |
| | 5,00 Gew. Teile DIMTS | | 4,50 Gew. Teile OIT |
| | 65,00 Gew. Teile Caprylsäure | | 65,00 Gew. Teile Caprylsäure |
| | 5,00 Gew. Teile 1,2 Propandiol | | 5,50 Gew. Teile 1,2 Propandiol |
| 7. | 10,00 Gew. Teile OPP | 8. | 10,00 Gew. Teile CMK |
| | 15,00 Gew. Teile Chlorophen | | 12,00 Gew. Teile p-Thymol |
| | 2,25 Gew. Teile OIT | | 5,00 Gew. Teile TBZ |
| | 70,00 Gew. Teile Caprylsäure | | 70,00 Gew. Teile Caprylsäure |
| | 2,75 Gew. Teile 1,2 Propandiol | | 3,00 Gew. Teile 1,2 Propandiol |

Sämtliche Präparationen sind lagerstabil bis mind. +5°C, wobei der Erstarrungspunkt durch Zugabe von weiteren Glykol noch erheblich erniedrigt werden.

### Anwendungsbeispiel 1

Die Gerbung mittels eines Chromgerbstoffes erfolgte wie folgt:
Nach üblichem Äscherverfahren, Entkälkung, Beize und Zugabe von Pickelsäuren (diese zur Änderung des pH-Wertes von alkalisch nach sauer, pH 8 → pH 2) werden die Chromgerbstoffe hinzugegeben.
Nach erfolgter Zugabe des Konservierungsmittels - hier die erfindungsgemäße Präparation - wird in der sog. Basifizierung der End-pH-Wert von ca. 4 eingestellt.

Als Konservierungsmittel wird die in Beispiel 1 beschriebene Wirkstoffpräparation wird mit 0,15 Gew.-%, (entspricht 150 ppm CMK, 375 ppm OPP, 35 ppm OIT, 900 ppm Caprylsäure und 40 ppm 1,2 Propandiol) berechnet auf Hautgewicht, dem Leder-Herstellungsprozess zugesetzt. Dies erfolgte prozessbedingt ca. 15 - 30 Minuten nach der Zugabe des Chromgerbstoffes in die saure Prozessflotte (pH-Wert 2,5 bis 3,0).

Die fungizide Wirkung der so erhaltenen feuchten Chrom-Leder (Wet blue), konserviert durch die Einzelwirkstoffe bzw. die erfindungsgemäßen Präparationen, wurden gemäß der Prüfmethode ASTM 4576-08 - "Standard Test Method for Mould Growth Resistance" (Praxis-bezogener Agar-Diffusionstest) gegen übliche Leder-relevante Prüforganismen untersucht. Hierbei wurde die wesentlich verbesserte Wirksamkeit der flüssigen Präparationen gegenüber den Einzelwirkstoffen dokumentiert.

Zum Nachweis der fungiziden Wirkung der erfindungsgemäßen Präparationen wurden zusätzlich die minimalen Hemmkonzentrationen (MHK-Werte) auf Malz-Extrakt-Agar (MEA-Medium, Merck 5398) gegen Leder-relevante Deuteromyceten (Schimmelpilze) bestimmt.

Dazu wurde die Mischungen konzentrationsabhängig - 20 / 50 / 100 / 200 / 500 / 1000 mg/L - auf das, mit den Prüfschimmeln kontaminierte Agar-Medium gegeben. Die Werte der minimal wirksamen Konzentrationen für Beispiel 1 sind der nachstehenden Tabelle zu entnehmen:

| Minimale Hemmkonzentrationen in mg/L | | | |
|---|---|---|---|
| Prüfschimmel | Mischung nach Beispiel 1 in [mg / L) vs. Caprylsäure | Prüfschimmel | Mischung nach Beispiel 1 in [mg / L) vs. Caprylsäure |
| Aspergillus flavus | 50 / 100 vs. >1000 | Paecilomyces variotii | <20 / 5 vs. >1000 |
| Aspergillus niger | 75 / 50 vs. >1000 | Penicillium chrysogenum | >20 / 10 vs. >1000 |
| Aspergillus repens | 50 / 75 vs. >1000 | Penicillium citrinum | 20 / 50 vs. >1000 |
| Aureobasidium pullulans | <20 / 20 vs. >1000 | Penicilllium funicolosum | 10 / 20 vs. >1000 |
| Cladosporium herbarum | >20 / 50 vs. >1000 | Penicillium glaucum | <20 / 50 vs. >1000 |
| Hormoconis resinae | >20 / 50 vs. >1000 | Trichoderma harzianum | 50 / 75 vs. >1000 |
| | | Trichoderma viride | 75/ 100 vs. >1000 |

Gleich gute Werte werden auch unter Verwendung der Wirkstoffpräparation gemäß den Beispielen 2 - 8 erhalten.

## Patentansprüche

1. Flüssige Wirkstoffpräparation, enthaltend jeweils bezogen auf die flüssige Wirkstoffpräparation
a) 55 - 89 Gew.-% wenigster einer bei Raumtemperatur flüssigen C₈-C₁₈-Carbonsäure oder deren Derivate, bevorzugt Caprylsäure,
b) wenigstes 10 Gew.-%, insbesondere 20 - 35 Gew.-% einer Mischung bestehend aus phenolischen Wirkstoffen, von denen wenigstens ein Wirkstoff o-Phenylphenol (OPP) oder p-Chlor-m-Kresol (CMK) ist und das Gewichtsverhältnis von OPP oder CMK zu der Summe der anderen phenolischen Wirkstoffe der Mischung 80 : 20 bis 20 : 80 beträgt und
c) 1 - 10 Gew.-% weitere Fungizidwirkstoffe.

2. Flüssige Wikstoffpräparation gemäß Anspruch 1, enthaltend jeweils bezogen auf die flüssige Wikstoffpräparation als Komponente b) nur die beiden phenolischen Wirkstoffe OPP und CMK, wobei das Gewichtsverhältnis von OPP zu CMK vorzugsweise 50 : 50 bis 75 : 25 beträgt.

3. Flüssige Wirkstoffpräparationen, gemäß Anspruch 1, **dadurch gekennzeichnet, dass** die Carbonsäure der Komponente a) Caprylsäure ist.

4. Flüssige Wirkstoffpräparationen gemäß Anspruch 1, **dadurch gekennzeichnet, dass** sie 1 bis 15 Gew.-%, insbesondere 1 bis 10 Gew.-%, bezogen auf die flüssige Wirkstoffmenge, eines alkoholischen oder glykolischen Lösungsmittel enthalten.

5. Flüssige Wirkstoffpräparationen gemäß Anspruch 1, **dadurch gekennzeichnet, dass** sie mehr als 98 Gew.-%, insbesondere mehr als 99 Gew.-% der Komponente a) bis c) enthalten.

6. Flüssige Wirkstoffpräparationen gemäß Anspruch 1, enthaltend in der Komponente b) als von o-Phenylphenol (OPP) und/oder p-Chlor-m-Kresol (CMK) verschiedenen phenolischem Wirkstoff wenigstens einen ausgewählt aus der Gruppe p-Thymol, Thymol, Chlorophen, 2-Benzylphenol, 4-Benzylphenol und 3,5-Dimethyl-4-chlorphenol (PCMX).

7. Flüssige Wirkstoffpräparationen gemäß Anspruch 1, enthaltend als einen Wirkstoff der Komponente c) wenigstens Oktyl-Isothiazolinon (OIT), Thiabendazol (TBZ), Iod-Propinylbutylcarbamat (IPBC), Di-Iodomethyl-p-toluyl-sulphon, Azaconazol, Hexaconazol, Cyproconazol, Propiconazol, Tebuconazol, Imazalil und/ oder Climbazol.

8. Verfahren zur Herstellung von Wirkstoffpräparationen gemäß Anspruch 1, **dadurch gekennzeichnet, dass** man
i) die Wirkstoffe der phenolischen Komponente b) gemeinsam oder nacheinander schmilzt, vorzugsweise unter Rühren, bei einer Temperatur >60°C und die Komponenten a) und c) bei einer Temperatur größer 5 °C zusetzt, oder
ii) die Wirkstoffe der phenolischen Komponente b) in einem organischen Lösungsmittel löst, das Lösungsmittel ggf. abtrennt, vorzugsweise destillativ, und die Komponenten a) und c) vor, während oder nach der Lösungsmittelzugabe zugegeben werden.

9. Verwendung von flüssigen Wirkstoffpräparationen gemäß Anspruch 1 zur Konservierung von collagenfaserhaltigen Substraten, insbesondere Ledern und tierischen Häuten.

10. Verfahren zum Schützen von collagenfaserhaltigen Substraten, insbesondere tierischen Häuten und Leder vor mikrobiellem Befall, **dadurch gekennzeichnet, dass** man die Häute oder das Leder mit einer flüssigen Wirkstoffpräparation nach Anspruch 1 behandelt.

11. Collagenfaserhaltige Substrate, konserviert mit wenigstens einer Wirkstoffpräparation nach Anspruch 1.
